Europäisches Patentamt

European Patent Office

Office européen des brevets

(11) Veröffentlichungsnummer: **0 278 385**
**A2**

## (12) EUROPÄISCHE PATENTANMELDUNG

(21). Anmeldenummer: **88101563.0**

(22) Anmeldetag: **04.02.88**

(51) Int. Cl.⁴: **B60N 1/12** , B62B 7/12

(30) Priorität: **07.02.87 DE 3703742**

(43) Veröffentlichungstag der Anmeldung:
**17.08.88 Patentblatt 88/33**

(84) Benannte Vertragsstaaten:
**AT BE CH DE FR GB IT LI LU NL SE**

(71) Anmelder: **Schmitt, Michael**
**Schlittweg 1**
**D-6509 Ober-Flörsheim(DE)**

(72) Erfinder: **Schmitt, Michael**
**Schlittweg 1**
**D-6509 Ober-Flörsheim(DE)**

(74) Vertreter: **Quermann, Helmut, Dipl.-Ing.**
**Postfach 6145 Gustav-Freytag-Strasse 25**
**D-6200 Wiesbaden(DE)**

(54) **Kindersitz für Fahrzeuge.**

(57) Die Erfindung betrifft einen Kindersitz für Fahrzeuge mit einer biegesteifen Sitzschale (1, 2) mit einer Sitzfläche, einer Rückenstütze und vorgezogenen Seitenabschnitten (15, 16) im Kopf-, Lenden-und Fußbereich, einem in der Sitzschale angeordneten Polsterelement zur Aufnahme des Kindes sowie mit der Sitzschale verbundenem Aufnahmeteil (3) zur Aufnahme des Beckengurtteils des Fahrzeugsicherheitsgurts.

Es ist Aufgabe vorliegender Erfindung, einen Kindersitz für Fahrzeuge zu schaffen, der für die unterschiedlichsten Einsatzzwecke genutzt werden kann, wobei eine einfache Bedienbarkeit des Kindersitzes gewährleistet sein soll.

Gelöst wird die Aufgabe dadurch, daß die Sitzschale aus einem Schalenrahmenteil (1) und einem in dieses einsteckbaren, das Polsterelement aufnehmenden Schaleneinsatzteil (2) besteht, wobei das Schaleneinsatzteil (2) an seiner Unterseite mit einem Stützrahmen (18) versehen ist.

FIG. 4

EP 0 278 385 A2

## Kindersitz für Fahrzeuge

Die Erfindung betrifft einen Kindersitz für Fahrzeuge mit einer biegesteifen Sitzschale mit einer Sitzfläche, einer Rückenstütze und vorgezogenen Seitenabschnitten im Kopf-, Lenden-und Fußbereich, einem in der Sitzschale angeordneten Polsterelement zur Aufnahme des Kindes, sowie mit der Sitzschale verbundenem Aufnahmeteil zur Aufnahme des Beckengurtteils des Fahrzeugsicherheitsgurts.

Ein derartiger Kindersitz ist aus dem deutschen Gebrauchsmuster G 80 26 558 bekannt. Der Kindersitz weist eine einstückige Sitzschale mit in dieser eingelegtem Polsterelement auf, befestigt wird die Sitzschale durch das unmittelbar an dieser angreifende Beckengurtteil, zur Sicherung des Kindes dienen separate mit der Sitzschale verbundene, am Polsterlement vorbeigeführte oder durch dieses hindurchgeführte Sicherheitsgurte. Der dargestellte Kindersitz weist ein Fahrgestell auf, das aus Räder aufnehmenden, vorderen und hinteren Fahrwerkbeinen besteht, die in Vertiefungen in der Sitzschale eingeklappt und versenkt sind. Die Fahrwerkbeine werden zur Bildung des Kinderwagens ergriffen und in die ausgefahrene Position verschwenkt, im Bereich der Rückenstütze der Sitzschale lassen sich Stützen zum Schieben des Kinderwagens anbringen.

Aus der deutschen Offenlegungsschrift 28 14 584 ist ein Kindersitz für Fahrzeuge bekannt, der mit einem einachsigen Fahrwerk in Verbindung gebracht werden kann.

Es ist Aufgabe vorliegender Erfindung, einen Kindersitz der genannten Art zu schaffen, der für die unterschiedlichsten Einsatzzwecke umgerüstet werden kann, wobei eine einfache Bedienbarkeit des Kindersitzes gewährleistet sein soll.

Gelöst wird die Aufgabe dadurch, daß die Sitzschale aus einem Schalenrahmenteil und einem in dieses einsteckbaren, das Polsterelement aufnehmenden Schaleneinsatzteil besteht, wobei das Schaleneinsatzteil an seiner unterseite mit einem Stützrahmen versehen ist.

Erfindungsgemäß ist somit die Sitzschale zweiteilig ausgebildet. Bei der Verwendung des Kindersitzes als Einheit, somit bei zusammengefügtem Schalenrahmenteil und Schaleneinsatzteil fungiert dieser in der herkömmlichen Form als Kindersitz im Fahrzeug. Beim Trennen des Schaleneinsatzteiles vom Schalenrahmeteil fungiert hingegen nur das Schaleneinsatzteil als Kindersitz und steht aufgrund des an diesem angebrachten Stützrahmens für die vielfältigsten Verwendungszwecke zur Verfügung. Der so gebildete Kindersitz kann beispielsweise als Stuhl oder Wippe, insbesondere Babywippe Verwendung finden. Daneben bietet sich die Verwendung als Fahrradkindersitz oder als Babyautosicherheitssitz an. Zweckmäßig ist hierzu der Stützrahmen als U-förmige Strebe ausgebildet, deren Schenkel im Bereich der Schenkelenden gleichsinnig abgewinkelt sind, wobei die freien Enden der Schenkel gelenkig im vorderen Bereich der Sitzfläche am Schaleneinsatzteil befestigt und durch eine Arretiereinrichtung festlegbar sind. Befindet sich die Arretiereinrichtung im Bereich des am Schaleneinsatzteil befindlichen Gerätes besteht aufgrund des Überhanges des Schaleneinsatzteiles die Möglichkeit zu wippen, ist die Arretiereinrichtung hingegen als verstellbares Verbindungselement ausgebildet, das gelenkig mit dem die Schenkel verbindenden Steg und der Rückenstütze des Schaleneinsatzteils verbunden ist, entsteht eine starre Einheit, die als Stuhl geeignet ist. Bei der Verwendung als Fahrradkindersitz können die U-förmigen Streben als seitliche Führung des Schaleneinsatzteiles auf dem Gepäckträger des Fahrrades dienen. Das Schaleneinsatzteil kann dabei auf fast alle herkömmlichen Gepäckträger aufgesetzt werden, ohne separat verschraubt werden zu müssen. Er wird von vorne in eine Quersprosse des Gepäckträgers eingehakt und hinten mit einem Gummizug befestigt. An der Unterseite des Schaleneinsatzteils beabstandet voneinander angeordnete, parallel zueinander in Längsrichtung der Sitzfläche verlaufende Profilierungen bewirken eine zusätzliche Führung des Schaleneinsatzteils in Längs-und Querrichtung des Gepäckträgers. Zusätzlich in ihrer Höhe stufenlos verstellbare Fußstützen bzw. Fußführungen gewährleisten, daß die Füße des Kindes sicher aufgenommen werden und keine Gefahr besteht, daß die Füße während des Fahrens in die Speichen des Rades gelangen. Bei der Verwendung als Babyautosicherheitssitz - schließlich wird das Schaleneinsatzteil mit dem Stützrahmen unmittelbar auf dem Sitz des Fahrzeuges abgestellt und das Schaleneinsatzteil mit dem Fahrzeuggurt fixiert. Ein zusätzlicher dem Schaleneinsatzteil zugeordneter Gurt insbesondere Y-Gurt sichert dabei das Baby.

Prinzipiell ist es ausreichend, wenn das Schaleneinsatzteil einfach in das Schalenrahmenteil eingesetzt ist, d.h. kein Formschluß zwischen den beiden Teilen besteht, der ein Herausnehmen bzw. Einsetzen des Schaleneinsatzteiles behindern würde. Aus Sicherheitsgründen sollte jedoch das Schalenrahmenteil eine Öffnung zur eingepaßten Aufnahme des Schaleneinsatzteiles aufweisen, es sollte somit entweder die Öffnung kleiner sein als das Schalen einsatzteil oder aber an den Berührungsflächen der beiden Teile Hinterschneidungen oder Fortsätze vorgesehen sein, die ineinander greifen. Daneben sollte die Möglichkeit bestehen, das Schaleneinsatzteil im Schalenrahmenteil zwischen einer Sitz-und einer Ruheposition verstellbar zu lagern, dies kann beispielsweise durch mindestens ein im Schalenrahmenteil - schwenkbar gelagertes Hebelement erfolgen, das in eine Ausnehmung im Schaleneinsatzteil eingreift und über einen manuell betätigbaren Schwenkhebel bewegt wird.

Aufgrund der Öffnung im Schalenrahmenteil weist dieses nur im Fußbereich und im verlängerten Kopfbereich ein Polsterelement auf, während der ganze Bereich des Schaleneinsatzteils, somit der Kopf-und Lendenbereich gepolstert ist. Das Schaleneinsatzteil wird in das Schalenrahmenteil eingesetzt, indem zunächst das untere Ende dieses Teiles eingeführt wird, die Fußstützen bzw. Fußführungen befinden sich dabei im Inneren des Schalenrahmenteils, anschliessend wird das obere Ende des Schaleneinsatzteils vollständig in die Öffnung eingedrückt. Um die Polsterung von Zeit zu Zeit reinigen zu können, sollte sie mittels eines Klettbandes mit dem Schalenrahmenteil bzw. dem Schaleneinsatzteil befestigt sein.

Vorteilhaft ist im Schalenrahmenteil ein ausfahrbares Fahrwerk, insbesondere ein zweiachsiges Fahrwerk angeordnet, das in eingefahrenem Zustand vollständig im Schalenrahmenteil versenkt ist. Das Fahrwerk sollte über ein Hebelgestänge mittels eines in der Rückenstütze des Schalenrahmenteils schwenkbar gelagerten Griffteils zum Bewegen des aus Kindersitz und Fahrwerk gebildeten Kinderwagens ein-bzw. ausfahrbar sein, wobei die Räder des Kinderwagens bei in die Rückenstütze eingeschwenktem Griffteil eingefahren und bei aus der Rückenstütze ausgeschwenktem Griffteil ausgefahren sind und das Griffteil in seinen Endstellungen durch Rastglieder arretierbar ist. Der Kindersitz wird somit durch Betätigung des Griffteiles in einen Kinderwagen verwandelt, die einzelnen Hebel des Hebelgestänges sind so aufeinander abgestimmt, daß die beiden Achsen synchron ausgefahren werden, die Rastglieder sorgen dafür, daß die Räder in eingefahrenem und ausgefahrenem Zustand arretiert sind.

Um zu verhindern, daß die eingefahrenen Räder den Fahrersitz verschmutzen, sollten Schutzbleche vorgesehen sein, so daß von den Rändern abtropfendes Wasser oder sich ablösender Schmutz vom Schutzblech aufgefangen wird. Die Schutzbleche können dazu beispielsweise so angeordnet und ausgebildet sein, daß sie die Räder jeweils auf einer Seite und am Umfang umgeben, wobei jeweils zwei Räder auf einer Achse angeordnet und die Räder senkrecht zur Achse ein-bzw. ausfahrbar sind. In diesem Fall ist parallel zu den einander benachbarten Rädern jeweils ein im Schalenrahmenteil schwenkbar gelagertes und gegen die Kraft mindestens einer Feder bewegbares kappenartiges Schutzblech angeordnet, wobei bei vollständigem Einfahren der jeweiligen Räder diese auf einen umlaufenden Wulst des Schutzbleches drücken und dabei das Schutzblech in eine Position verschwenken, bei der es diese Räder auf deren Außenseite und deren Umfang vollständig umgibt. Zusätzlich können noch kleine Radbürsten oder Schutzbleche am Schalenrahmenteil angebracht sein, die ein Verschmutzen des Kinderwagens im Fahrzustand verhindern. Die Räder können jedoch gleichfalls so angeordnet sein, daß zwar jeweils zwei Räder mit einer Achse verbunden sind, abgesehen hiervon sind die Räder aber in der jeweiligen Radebene ein-bzw. ausfahrbar angeordnet, wobei jedem Rad ein dieses vorne bzw. hinten umschließendes Schutzblech zugeordnet ist, das im verschwenkbaren Lagerelement des jeweiligen Rades um eine beabstandet zur Drehachse des Rades positionierte Schwenkachse gelagert ist. Eine derartige Anordnung des Schutzbleches ermöglicht in der eingefahrenen Stellung des diesem und dem jeweiligen Rad zugeordneten Lagerelementes nicht nur eine sichere Abdeckung des Rades nach unten hin, sondern es ist gleichfalls möglich, daß sich in der ausgefahrenen Stellung des jeweiligen Rades durch Drehen des Schutzbleches aufgrund dessen exzentrischer Lagerung dieses gegen das Rad bewegt und damit arretiert.

Zweckmäßig weist die Rückenstütze des Schalenrahmenteils auf ihrer Rückseite ein abnehmbares Rückensegment auf, das eine Gepäcknetz und/oder eine durch einen Deckel verschließbare Ausnehmung beinhaltet. Durch die Ausbildung des Schalenrahmenteils mit dem abnehmbaren Rückensegment ist gewährleistet, daß das Hebelgestänge zur Betätigung des Fahrwerks unkompliziert zugänglich ist.

Gemäß einer besonderen Ausführungsform der Erfindung ist vorgesehen, daß das Schalenrahmenteil im Bereich der Rückseite der Rückenstütze eine sich vom oberen Rand der Rückenstütze nach unten erstreckende längliche Ausnehmung zur Aufnahme eines zusammengeklappten, ausschwenkbaren Schirmes aufweist, der im Bereich des oberen Endes der Ausnehmung mit dem Schalenrahmenteil verbunden ist. Weist das Schalenrahmenteil im Bereich der Rückseite der Rückenstütze zwei sich über die Länge der Rückenstütze erstreckende nutförmige Ausnehmungen auf, können in diese Kufen eingesteckt, insbesondere eingerastet werden, die im Bedarfsfall mit jeweils benachbarten Rädern verbindbar sind. Die Ausnehmung für eine Kufe kann dabei gleichzeitig der Aufnahme des Schirmes dienen. Entfernt man die Kufe, kann der Schirm nach oben herausgeklappt werden, wo er arretiert wird, anschließend wird die Kufe wieder in die Ausnehmung eingeschoben. Durch bewegliche Elemente kann der Schirm in alle gewünschten Position gebracht werden. Für den Fall, daß die Anordnung eines Schirmes nicht mit der vorstehend erörterten Ausbildung mit den unter die Räder steckbaren Kufen kombiert werden soll, wird es als durchaus ausreichend angesehen, nur in dem dem kopf des Kindes zugewandten Bereich des Schalenrahmenteiles ein Verdeck zu integrieren, was durch eine Schwenkbewegung um etwa 180° oberhalb des Kopfes positioniert werden kann.

Abgesehen von der zuvor beschrieben Variante, bei der die Schutzbleche durch eine Schwenkbewegung unmittelbar auf die Räder abgesenkt werden können und diese damit arretieren, besteht die Möglichkeit, das Fahrwerk mit einer solchen Bremse zu versehen, die nicht auf die Räder wirkt, sondern sich am Boden abstützt. Es ist hierdurch eine Bremsung auf trockenem Boden sowie im Schnee gewährleistet.

Das Aufnahmeteil für das Beckengurtteil des Fahrzeugsicherheitsgurtes sollte als Fangkörper ausgebildet sein, der sich über das Schaleneinsatzteil erstreckt und in das Schalenrahmenteil einsteckbar ist. Die Oberfläche des Fangkörpers ist zweckmäßig mit einem gepolsterten Rand versehen, wodurch beim Spielen des Kindes auf diesem ein Herunterrollen von Gegenständen verhindert wird. Vorteilhaft ist der Fangkörper so gestaltet, daß er alleine als Sitzunterlage für etwas größere Kinder dienen kann, die damit beim Autofahren besser aus dem Fenster schauen und am Geschehen außerhalb des Fahrzeuges teilnehmen können. Um den Fangkörper als Sitzteil verwendung zu können, kann es erforderlich sein, diesen umzudrehen, so daß das Kind auf der üblicherweise nach unten gerichteten Seite des Fangkörpers sitzt.

Der vorstehend beschriebene Kindersitz ermöglicht eine universelle Verwendung, ohne daß es einer Vielzahl von Einzelteilen bedarf. So kann der Kindersitz seiner eigentlichen Verwendung entsprechend verwendt werden, daneben als Stuhl, Wippe, Fahrradkindersitz und Babyautosicherheitssitz. Insbesondere beim Camping mit Wohmmobil, Wohnwagen oder Zelt ergibt sich eine große Platzeinsparung, es wird kein zusätzlicher Raum, beispielsweise für den separat im Kofferraum mit zu transportierenden Kinderwagen oder eine Babywippe benötigt. Daneben ergeben sich vielfältige Einsatzmöglichkeiten bei der Verwendung als Kinderwagen mit Kufen.

Weitere Merkmale der Erfindung sind in der Beschreibung der Figuren und in den Unteransprüchen dargestellt, wobei bemerkt wird, daß alle Einzelmerkmale und alle Kombinationen von Einzelmerkmalen erfindungswesentlich sind.

In den Figuren ist die Erfindung an zwei Ausführungsformen beispielsweise dargestellt, ohne auf diese beschränkt zu sein. Es zeigt:

Figur 1 den erfindungsgemäßen Kindersitz in der ersten Ausführungsform mit ausgefahrenem Fahrwerk von vorne,

Figur 2 den Kindersitz von hinten mit untergesetzten Kufen,

Figur 3 den Kindersitz mit eingefahrenem Fahrwerk bei seiner Verwendung im Fahrzeug,

Figur 4 eine Explosionsdarstellung der Einzelteile des Kindersitzes,

Figur 4a eine Detailansicht eines Kufenendes,

Figur 5 eine schematische Darstellung der Kinematik zum Einschwenken des Fahrwerks.

Figur 6 eine Darstellung gemäß Figur 5 bei eingeschwenktem Zustand des Fahrwerks,

Figur 7 eine Unteransicht in Richtung des Pfeiles VII in Figur 6,

Figur 8 eine Ansicht auf das Fahrwerk in Richtung des Pfeiles VIII in Figure 6 zur Verdeutlichung des Einschwenkvorganges des Schutzbleches,

Figur 9 eine Seitenansicht gemäß der Linie IX-IX in Figur 8 auf eines der Schutzbleche,

Figur 10 eine steihenansicht eines Fahrrades im Bereich des Hinterrades mit auf dem Gepäckträger angeordnetem Kindersitz und

Figur 11 einenn Shnitt durch die Sitzschale gemäß der Linie XI-XI in Figure 10.

Figur 12 den erfindungsgemäßen Kindersitz in einer zweiten Ausführungsform, von der Seite gesehen in vereinfachter Darstellung,

Figur 13 eine Seitenansicht des Kindersitzes mit einer schematischem Darstellung der Kinematik zum Einschwenken des Fahrwerts.

Figur 14 einen Längsschnitt durch das Schalenrahmenteil und das Schaleneinsatzteil mit in Sitzposition dargestelltem Schaleneinsatzteil und

Figur 15 eine Anschicht gemäß Figur 15 mit dem Schalen einsatil in der Ruheposition.

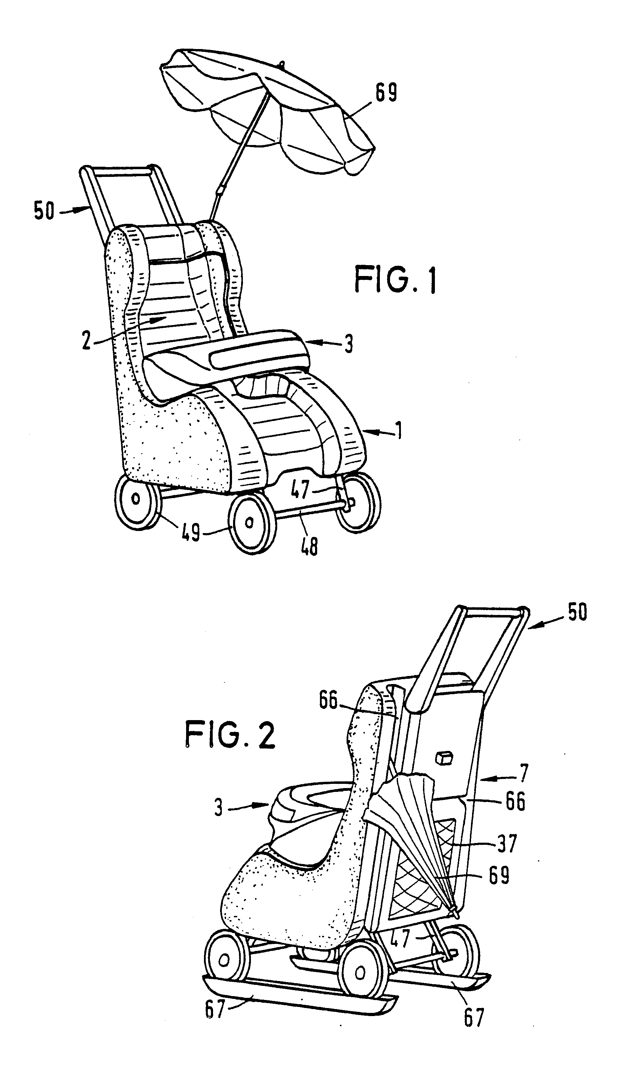

Der in den Figuren 1 bis 4 dargestellte Kindersitz besteht im wesentlichen aus einem Schalenrahmenteil 1, einem in dieses einsteckbaren Schaleneinsatzteil 2, einem Aufnahmeteil 3 für das Beckengurtteil 4 des Fahrzeugsicherheitsgurtes 5, einem im Schalenrahmenteil 1 gelagerten Fahrwerk 6 sowie einem vom Schalenrahmenteil 1 abnehmbaren Rückensegment 7. Das Schalenrahmenteil 1 besitzt Seitenflächen 8 und 9, die im oberen Bereich mittels eines Steges 10 sowie im unteren Bereich mittels eines Steges 11 verbunden sind, zwischen den Teilen 8 bis 11 ist eine Öffnung 12 im Schalenrahmenteil 1 zur Aufnahme des Schaleneinsatzteils 2 gebildet. Das Schaleneinsatzteil 2 weist eine Sitzfläche 13 sowie eine Rückenstütze 14 auf, mit vorgezogenen Seitenabschnitten 15 und 16 im Kopf-, Lenden-und Fußbereich, zwischen den beiderseitigen vorgezogenen Seitenabschnitten 15 und 16 ist ein Polsterelement 17 angeordnet, das mittels eines nicht näher dargestellten Klettverschlusses mit dem Schaleneinsatzteil 2 verbunden ist und dabei auch die Seitenabschnitte 15 und 16 bedeckt.

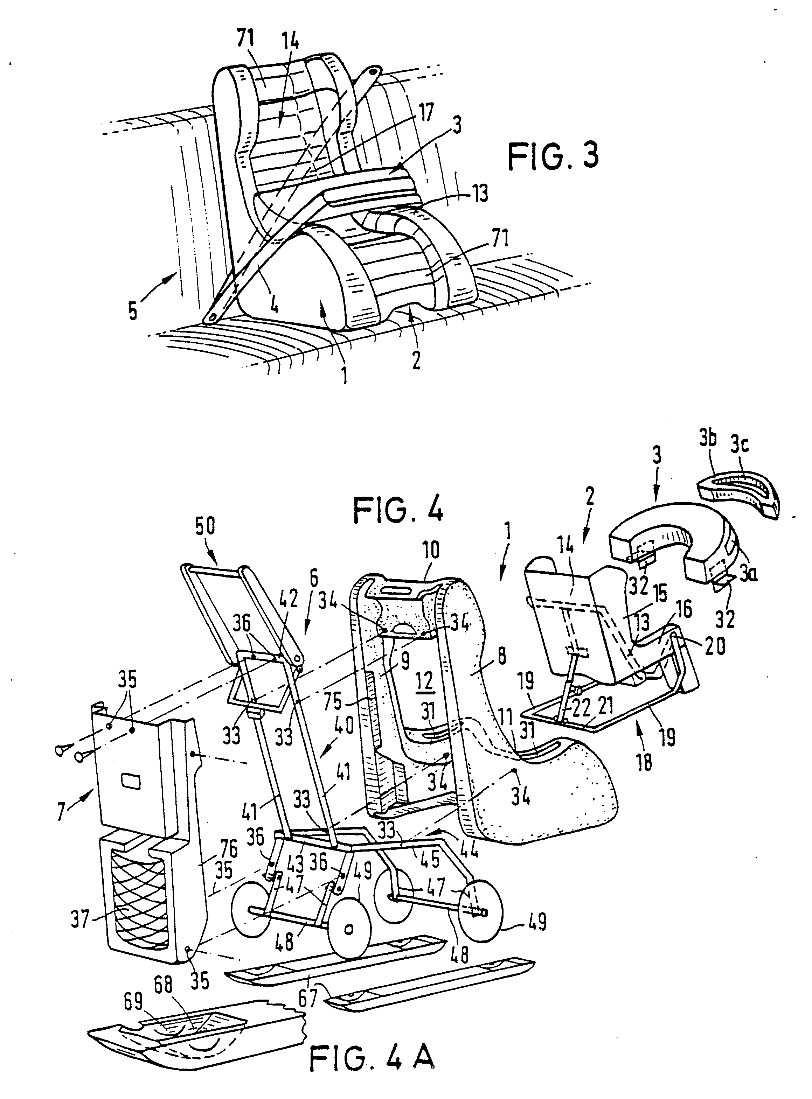

An der Unterseite ist das Schaleneinsatzteil 2 mit einem Stützrahmen 18 versehen, der als U-förmige Streben ausgebildet ist. Die Schenkel 19 der Streben sind im Bereich der Schenkelenden zum Schaleneinsatzteil 2 abgewinkelt, die freien Enden der Schenkel 19 sind im vorderen Bereich der Seitenabschnitte 16 mittels eines Gelenkes 20 am Schaleneinsatzteil 2 befestigt. Der die beiden dem Gelenk 20 abgewandten Enden der Schenkel 19 verbindende Steg 21 nimmt eine verstellbares Verbindungselement 22 gelenkig auf, das andererseits mit der Rückenstütze 14 des Schaleneinsatzteils 2 gelenkig verbunden ist. Die Figur 4 verdeutlicht mit ausgezogenen Linien die Position des Stützrahmens 18 in ausgeschwenktem Zustand, bei dem das Schaleneinsatzteil 2 als Stuhl, Fahrradkindersitz oder Babyautosicherheitssitz Verwendung finden kann, mit gestrichelten Linien ist die eingeschwenkte Stellung des Stützrahmens 18 verdeutlicht, in der das Schaleneinsatzteil 2 in das Schalenrahmenteil 1 eingesetzt werden kann. Soll der Kindersitz zusätzlich als Wippe Verwendung finden, ist im Bereich des gelenkseitigen Endes jedes Schenkels 19 ein Anschlag vorzusehen, der das Schenkelende hintergreift und das Verbindungselement 22 zu lösen.

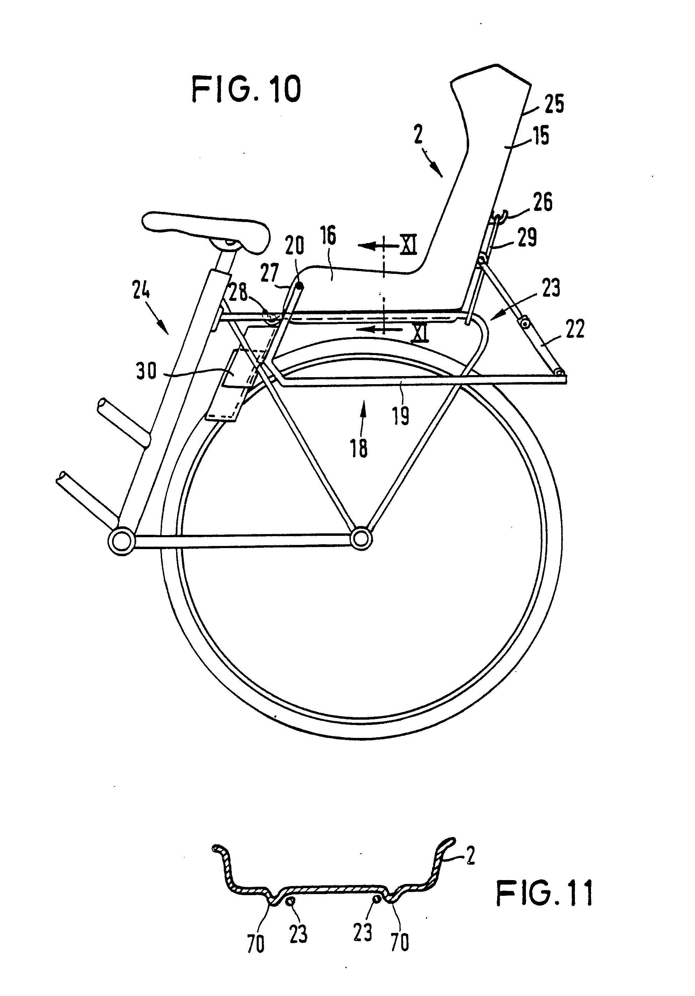

Die Figuren 10 und 11 verdeutlichen die Anordnung des Schaleneinsatzteiles 2 mit dem ausgefahrenen Stützrahmen 18 auf dem Gepäckträger 23 eines Fahrrades 24. An der rückwärtigen Fläche 25 des Schaleneinsatzteiles 2 ist ein nach oben offener Haken 26 angeordnet, desgleichen an der Vorderfläche 27 ein entsprechender Haken 28, die Befestigung des Schaleneinsatzteiles 2 erfolgt durch Einhängen des Hakens 28 in eine Quersprosse des Gepäckträgers 23 und einen Gummiring 29, der den Haken 26 des Schaleneinsatzteiles 2 umschlingt. Längliche Profilierungen 70 geben dem Schaleneinsatzteil 2 zusätzlichen Halt.

Im Bereich der Vorderfläche 27 benachbart zur Vorderkante der Sitzfläche 13 des Schaleneinsatzteiles 2 sind zwei beabstandet voneinander angeordnete verstellbare Fußführungen 30 befestigt, um zu verhindern, daß das Kind beim Fahren mit seinem Fuß in die Speichen des Fahrrades gelangt. Um das Schaleneinsatzteil 2 in das Schalenrahmenteil 1 einsetzen zu können, wird das Verbindungselement 22 gelöst und der Stützrahmen 18 in die in Figur 4 gestrichelt dargestellte Position verschwenkt, ferner die Fußführungen 30 in die in Figur 10 dargestellte, eingefahrene Position überführt. Die Abmessungen der Öffnung 12 des Schalenrahmenteils 1 sind so gewählt, daß das Schaleneinsatzteil 2 in das Schalenrahmenteil 1 eingepaßt werden kann, d.h. eine reibschlüssige Verbindung zwischen den Teilen 1 und 2 gewährleistet ist. Daneben besteht selbstverständlich auch die Möglichkeit, an den Teilen 1 und 2 Hinterschneidungen bzw. Fortsätze vorzusehen, um so die Teile mittels Formschluß zu verbinden. Das Schaleneinsatzteil 2 wird von oben in das Schalenrahmenteil 1 eingesetzt, indem zunächst die Fußführungen 13 unten in die Öffnung 12 eingesteckt werden, so daß das Schaleneinsatzteil 2 im Bereich seiner Vorderfläche 27 in Anlage mit dem Schalenrahmenteil 1 gelangt, anschließend wird die rückwärtige Fläche 25 des Schaleneinsatzteils 2 in Richtung des Schalenrahmenteils 1 geschwenkt, bis das Schaleneinsatzteil 2 vollständig in das Schalenrahmenteil 1 eingesetzt ist. Im eingesetzten Zustand des Schaleneinsatzteiles 2 ergibt sich eine stetige Sitzfläche für das Kind durch das die Sitzfläche 13 und die Rückenstütze 14 bedeckende Polsterelement 17 und zwei davon separat mit dem Schalenrahmenteil verbundene Polsterelemente 71, was in Figur 3 verdeutlicht ist. Das Schalenrahmenteil 1 weist im Bereich der Sitzfläche 13 des Schaleneinsatzteils 2 zwei - schlitzförmige Ausnehmungen 31 auf, in die das als Prallkörper wirkende Aufnahmeteil 3 mit seinen Ansätzen 32 eingedrückt werden kann und in der eingedrückten Stellung einrastet. Zum Entfernen des Aufnahmeteils 2 wird dieses von beiden Seiten etwas zusammengedrückt und nach oben herausgenommen. Die Abmessungen der Ausnehmungen 31 sind dabei in deren Längsrichtung größer als die der Ansätze 32, so daß das Aufnahmeteil 3 entsprechend der Größe des Kindes nach vorne bzw. hinten verschoben werden kann. Infolge eines unterschiedlichen Neigungswinkels von Sitzfläche 13 und der die Ausnehmungen 31 aufnehmenden Flächen ist gewährleistet, daß beim Verschieben nach vorne der Abstand zwischen dem Aufnahmeteil 3 und der Sitzfläche 13 entsprechend den Platzerfordernissen der Beine vergrössert wird. Das Aufnahmeteil 3 weist in der vorderen Stirnfläche eine Ausnehmung 3a auf, in die zum Befestigen des Kindersitzes das Beckengurtteil 4 eingelegt und anschliessend die Ausnehmung 3a durch das Einschubteil 3b verschlossen wird. Das Einschubteil 3b besitzt eine in seine obere Fläche eingebrachte Ausnehmung 3c, die zur Aufnahme flacher Gegenstände dient.

Im Schalenrahmenteil 1 ist das Fahrwerk 6 in den Punkten 33 und 34 gelagert, die offene Rückseite des Schalenrahmenteils 1 wird durch das Rückensegment 7 verschlossen, das in den Punkten 35 und 36 mit dem Fahrwerk 6 verbunden ist. Das Rückensegment 7 besitzt ein Gepäcknetz 37.

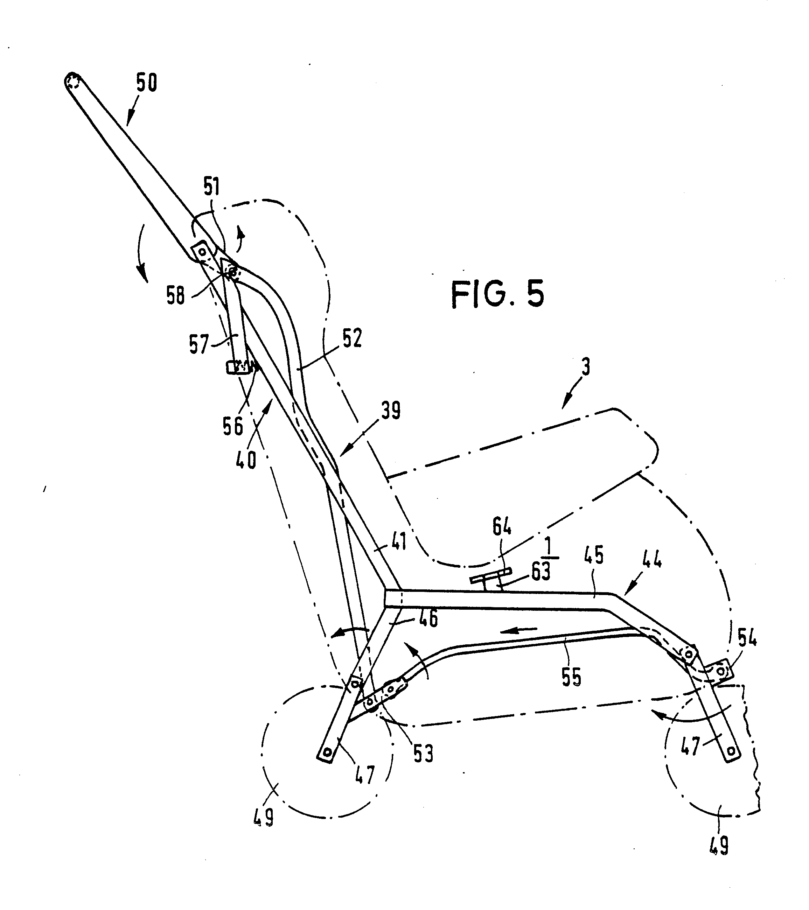

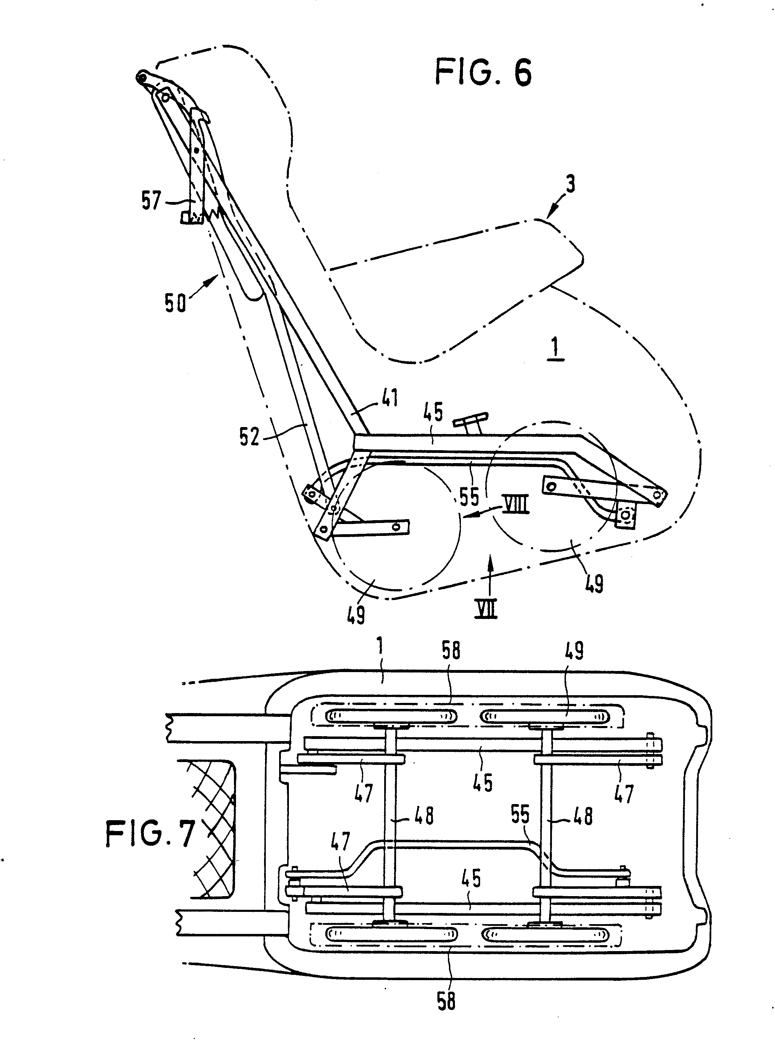

Die Ausbildung und Funktion des in der Figur 4 nur unvollständig dargestellten Fahrwerks 6 ist in den Figuren 5 bis 9 eingehend veranschaulicht. Das ein Hebelgestänge 39 aufweisende Fahrwerk 6 beinhaltet im Bereich der Rückenstütze 14 ein U-förmiges Rahmenteil 40 mit zwei parallel verlaufenden Schenkeln 41, die oberen Enden der Schenkel 41 sind durch einen Steg 42 verbunden, die unteren Enden münden in den Steg 43 eines waagerecht verlaufenden U-förmig ausgebildeten Rahmenteils 44, dessen beide Schenkel 45 im Bereich ihrer freien Enden schräg nach unten abgewinkelt sind. Im Bereich der Verbindungen der Schenkel 45 mit dem Steg 43 des Rahmenteils 44 sind mit diesem schräg nach unten gerichtete Ansätze 46 verbunden, sowohl die freien Enden der beiden Ansätze 46 als auch diejenigen der Schenkel 45 nehmen schwenkbar Fahrwerksbeine 47 in sich auf, die Achsen 48, die die Räder 49 drehbar aufnehmen sind fest mit den unteren Enden der Fahrwerksbeine 47 verbunden. Wie der Darstellung der Figuren 5 bis 7 zu entnehmen ist, ist in der Verlängerung des Steges 42 des Rahmenteiles 40 ein U-förmiges Griffteil 50 schwenkbar gelagert. An einen mit dem Griffteil 50 fest verbundenen Fortsatz 51 ist ein Betätigungshebel 52 schwenkbar angelenkt, das untere freie Ende dieses Betätigungshebels 52 ist schwenkbar mit einem Stellhebel 53 verbunden, der beabstandet zum Lagerpunkt eines der hinteren Fahrwerksbeine 47 im betreffenden Ansatz 46 am hinteren Fahrwerksbein 47 befestigt ist. Auch das auf der entsprechenden Seite befindliche vordere Fahrwerksbein 47 besitzt einen Stellhebel 54, zwischen dem freien Ende des Stellhebels 53 und dem freien Ende des Stellhebels 54 ist ein weiterer Betätigungshebel 55 schwenkbar angelenkt. Ein im Bereich des Griffteiles 50 angeordneter, gegen die Kraft einer Feder 56 ausrückbarer Arretierungshebel 57 rastet mit seiner Nase 58 in einen am Fortsatz 51 angebrachten Ansatz ein und verhindert damit, daß das Fahrwerk ungewollt eingefahren werden kann. Zum Einfahren des Fahrwerks von der in Figur 5 dargestellten ausgefahrenen Position der Räder 49 in die Stellung gemäß der Darstellung in Figur 6 muß der Arretierungshebel 57 gegen die Kraft der Feder 56 bewegt werden, es kann damit das Griffteil in Richtung des Pfeiles bewegt werden, entsprechend der in den Figuren 5 eingezeichneten Pfeile bewegt sich der Betätigungshebel 52 nach oben, verschwenkt die hinteren Räder 49 entgegen dem Uhrzeigersinn und die vorderen Räder 49 im Uhrzeigersinn in den unter dem Schaleneinsatzteil 2 befindlichen freien Raum.

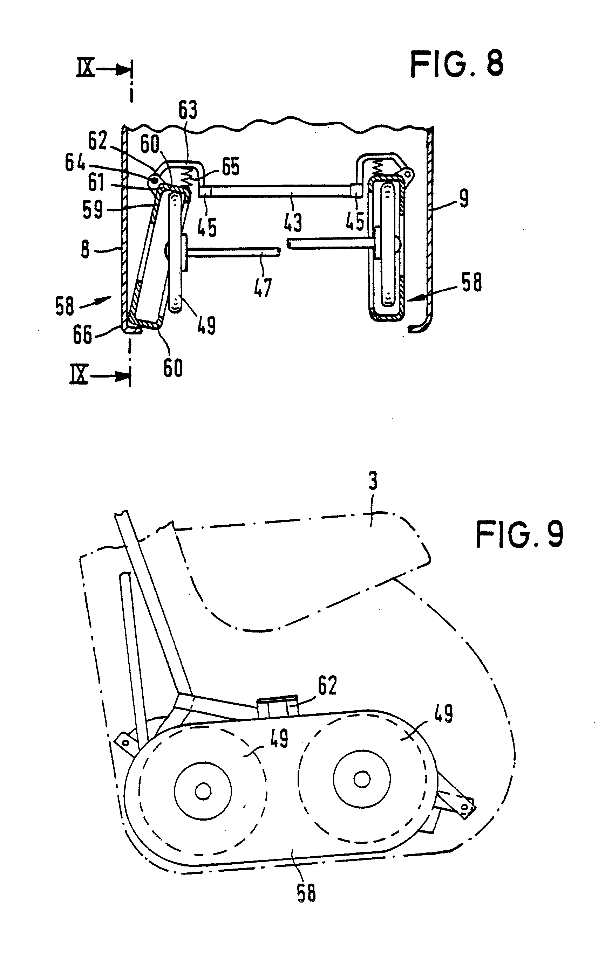

Die Figuren 8 und 9 verdeutlichen die Anordnung und Ausbildung zweier kappenartig ausgebildeter Schutzbleche 58, die in der eingefahrenen Stellung der Räder 49 jeweils zwei benachbarte Räder umschließen und somit eine Verschmutzung eines unter dem Kindersitz befindlichen Gegenstandes, beispielsweise den Fahrzeugsitz verhindern. Die Schutzbleche 58 sind länglich ausgebildet mit entsprechend dem Radius der Räder 49 vergrößerten Rundungen, sie bestehen aus einem Seitenblech 59 sowie einem am Umfang des Seitenblechs verlaufenden, jeweils nach innen gerichteten umlaufenden Wulst 60. Der Wulst 60 weist oben im Bereich der mit dem Seitenblech 59 gebildeten Kante 61 einen Ansatz 62 auf, der von einem mit dem jeweiligen Schenkel 45 verbundenen Tragarm 63 in Punkt 64 gelenkig aufgenommen wird. Im Abstand von Gelenkpunkt 64 ist zwischen dem Tragarm 63 und dem Wulst 60 eine Druckfeder 65 angeordnet, die in ausinandergedrückter Stellung das ensprechende Schutzblech 58 mit seiner Kante 66 gegen die Seitenfläche 8 oder 9 des Schalenrahmenteils 1 drückt und damit den Weg für die Räder 49 zum Ein-bzw. Ausfahren freigibt. Kurz vor dem vollständigen Einfahren nimmt das Schutzblech 58 die in Figur 8 links dargestellte Position ein, beim geringfügigen weiteren Einfahren der Räder 49 gelangt der obere Mantelbereich des Rades 49 in Anlage mit der oberen Innenfläche des Wulstes 60 und verschwenkt das Schutzblech entgegen der Kraft der Feder 65 von der Seitenfläche 8 bzw. 9 weg, so daß das Schutzblech 58 die jeweiligen beiden Räder 49 vollständig umschließt.

Wie der Darstellung der Figur 2 und 4 zu entnehmen ist, besitzt das Schalenrahmenteil 1 im Bereich der Rückseite der Rückenstütze zwei sich über die Länge des Rückensegments 7 erstreckende zwischen den Ansätzen 75 und 76 gebildete nutförmige Ausnehmungen 66, in die jeweils Kufen 67 einrastbar sind. Um in Schnee fahren zu können, drückt man die Kufen 67 etwas nach oben aus ihrer Rasterung und zieht sie dann nach hinten heraus. Anschließend setzt man sie unter die Räder 49 und drückt diese in die in Figur 4 A im Detail gezeigten Aufnahmemulden 68, wobei in den Aufnahmemulden 48 befindliche Rasten 69 die Mäntel der Räder sicher in den Kufen 67 halten. Die Kufen sind an beiden Enden mit Radien versehen, um zu verhindern, daß beim beabsichtigten Kippen des Kinderwagens nach hinten oder vorne sich die Kufen von den Rädern lösen. Eine der Ausnehmungen 66 dient gleichzeitig zur Aufnahme eines Sonnen-bzw. Regenschirmes 69. Der Schirm ist oben in der Ausnehmung 66 gelenkig gehalten und arretierbar, nach dem Entfernen der betreffenden Kufe 67 aus der Ausnehmung 66 kann der Schirm 69 nach oben geschwenkt, arretiert und aufgespannt werden, anschließend wird die Kufe 67 wieder in die Ausnehmung 66 eingesetzt.

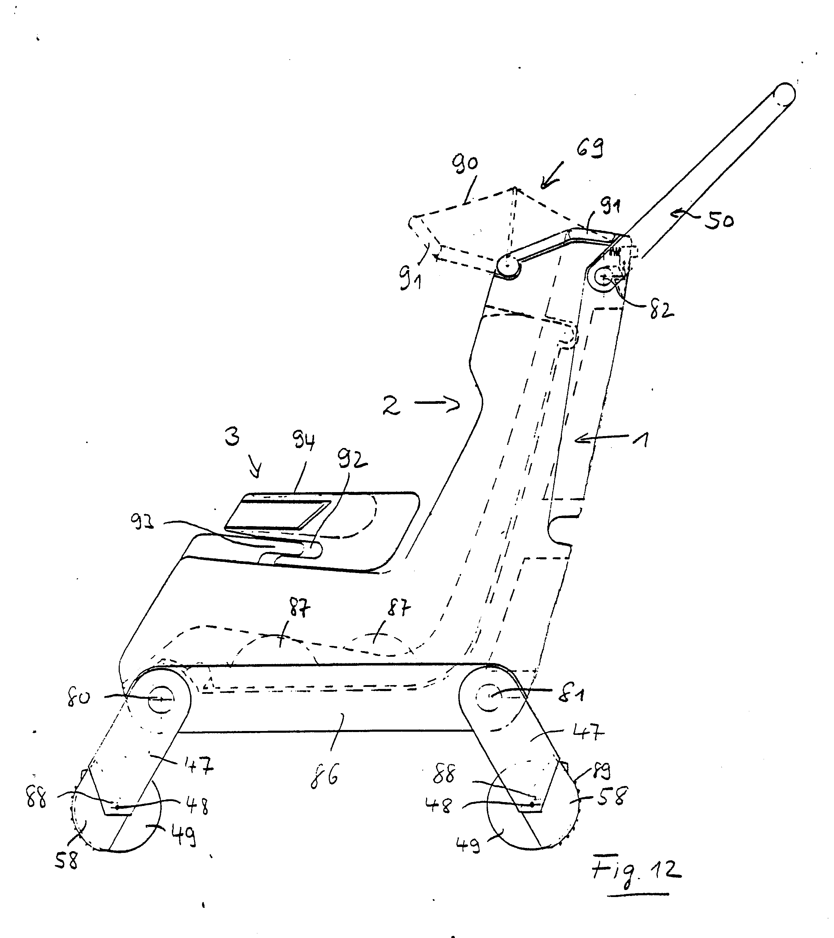

In den Figuren 12 bis 15 ist die zweite Ausführungsform des erfindungsgemäßen Kindersitzes beschrieben. Mit der ersten Ausführungsform nach den Figuren 1 bis 11 in ihrer Funktion übereinstimmende Teile sind der Einfachheit halber mit gleichen Bezugsziffern bezeichnet.

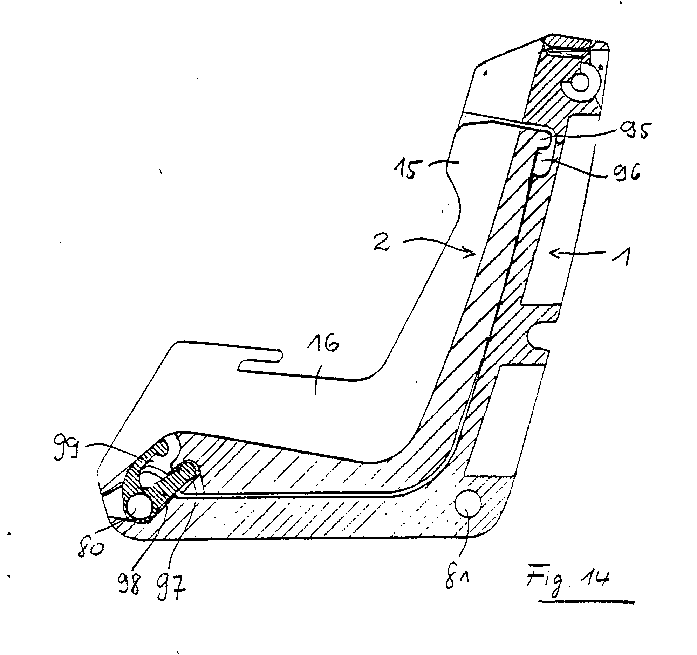

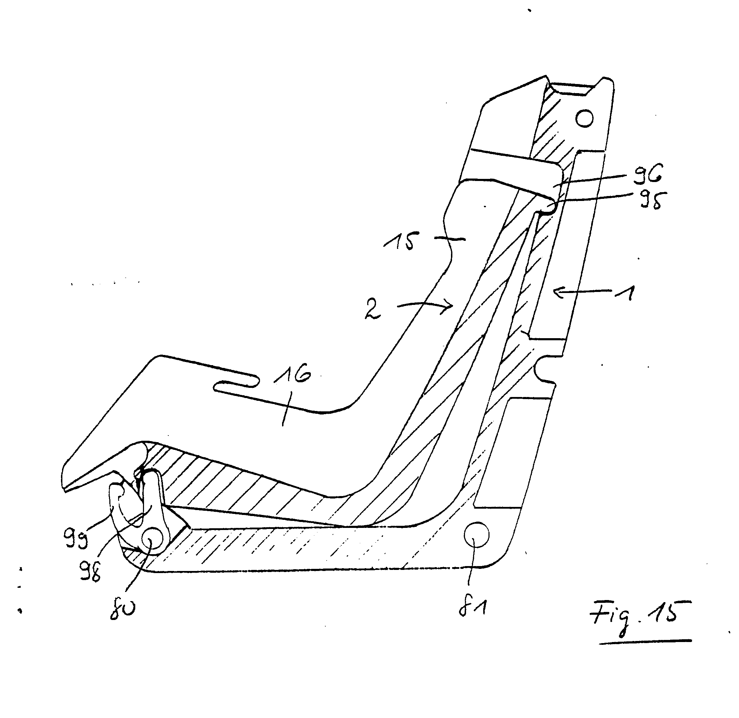

Der Kindersitz nach der zweiten Ausführungsform unterscheidet sich von dem nach der ersten insbesondere durch die variable Lagerung des Schaleneinsatzteiles 2 im Schalenrahmenteil 1 und damit der Möglichkeit, das Schaleneinsatzteil 2 zwischen der in Figur 14 gezeigten Sitzposition und der in Figur 15 gezeigten Ruhenposition zu verschwenken, ferner durch die veränderte Anordnung und Kinematik des Fahrwerkes.

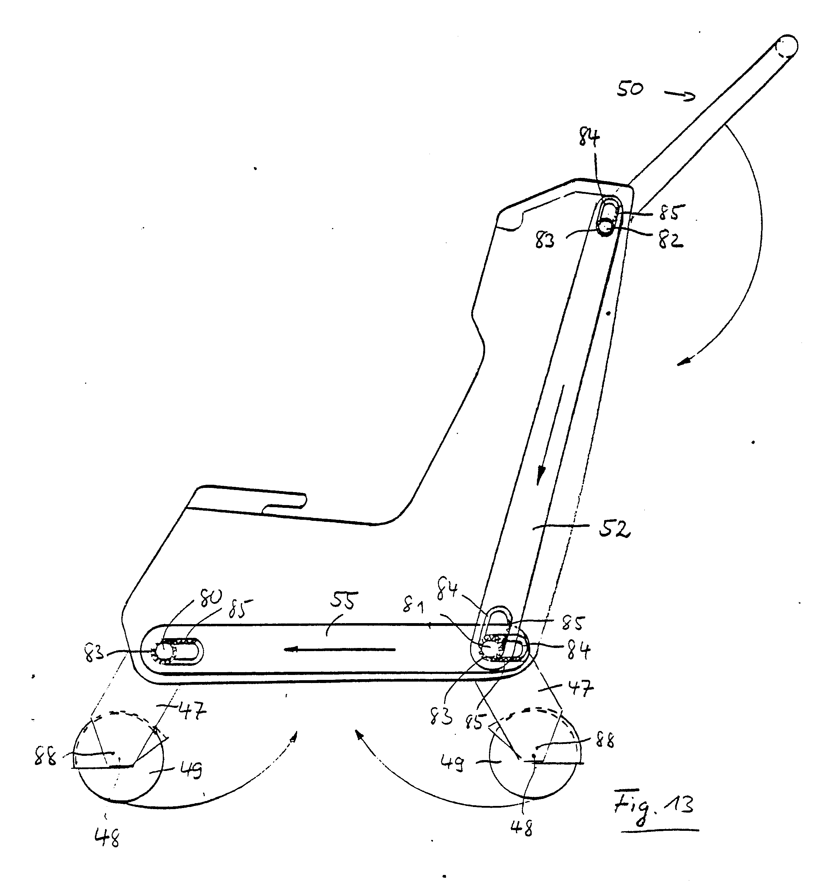

Figur 12 zeigt das Griffteil 50 zum Verschwenken der gleichfalls paarweise angeordneten Räder 49, jedes Rad 49 ist in einem Fahrwerksbein 47 gelagert, das drehfest mit das Schalenrahmenteil 1 durchsetzenden Wellen 80 und 81 verbunden ist. Die Figur 13 verdeutlicht in diesem Zusammenhang mit der Figur 12 die Kinematik des Fahrwerkes. Mit der Lagerwelle 82 des Griffteiles 50 ist ein Zahnrad 83 fest verbunden, das ein Langloch 84 durchsetzt, welches auf seiner dem Griffteil zugewandten Geraden Zähne 85 aufweist. Ein Abschwenken des Griffteiles 50 führt damit zu einer nach unten gerichteten geradlinigen Bewegung des Betätigungshebels 52, der an seinem unteren Ende gleichfalls ein Langloch 84 mit entsprechend dem oberen Langloch 84 angeordneten Zähnen 85 aufweist. Das untere Langloch durchsetzt ein drehfest mit der Welle 81 verbundes weiteres Zahnrad 83, womit die oben genannte Bewegung des Betätigungshebels 52 zu einer Schwenkbewegung der beiden drehfest mit der Welle 81 verbundenen Fahrwerksbeine 47 im Uhrzeigersinn im Sinne des Einfahrens der Räder 49 führt. Das der Welle 81 zugeordnete Zahnrad 83 durchsetzt ferner ein Langloch 84 eines weiteren Betätigungshebels 55, das auf seiner den hinteren Rädern zugewandten Geraden wiederum mit Zähnen 85 versehen ist, so daß die durch den Betätigunschebel 52 vorgegebene Bewegung zu einer Bewegung des Betätigungshebels 55 von der Welle 81 wegführt. Das der Welle 81 abgewandte Endes des Betätigungshebels 55 ist schließlich ebenfalls mit einem Langloch 84 versehen, weist aber auf der dem anderen Langloch 84 dieses Betätigungshebels 55 abgewandten Gerade die Zähne 85 auf, so daß die ein enstsprechendes Zahnrad 83 aufweisende Welle 80, mit der die Fahrwerksbeine 47 der vorderen Räder 49 drehfest verbunden sind, entgegen dem Uhrzeigersinn verschwenkt werden. Beim Verschwenken des Griffteiles 50 im Uhrzeigersinn erfolgt damit ein Einfahren des Fahrwerkes, wobei in der eingefahrenen Stellung die Fahrwerksbeine 47 in seitlichen Aussparungen 86 des Schalenrahmenteiles 1 zu liegen kommen und die dann oberen Radabschnitte in paarweise angeordnete Radaufnahmen 87 im Schalenrahmenteil 1 ragen. Die in eingefahrenem Zustand des Fahrwerkes nach ununten weisenden Radbereiche werden dabei von sich etwa über einen Drittelkreis erstreckenenden Schutzblechen 58 verdeckt. Diese sind exzentrisch zu den Lagerachsen 48 für die Räder 49 in Lagerachsen 88 der Fahrwerksbeine 47 gelagert, so daß bei ausgefahrenem Fahrwerk ein Verschwenken der Schutzbleche 58 dazu führt, daß sich die die Räder 49 umgebenden Bogenabschnitte der Schutzbleche 58 außen an die Räder 49 legen and diese arretieren. Die Bremswirkung der Schutzbleche 58 kann dabei durch Noppen 89 verstärkt werden, die sich im Berührungsbereich zwischen dem jeweiligen Schutzblech 58 und dem Rad 49 an dieses anlegen, ist das jeweilige Schutzblech auch noch außen mit Noppen versehen, ermöglicht dies ein einfacheres Verschwenken des Schutzbleches 58 mittels des Fußes.

Die Figuren 12 und 13 verdeutlichen einen im oberen Frontbereich des Schalenrahmenteils 1 - schwenkbar gelagerten Schirm 89, der in Art eines Verdeckes ausgebildet ist, in dem das Tuch 90 am Verdeckrahmen 91 befestigt ist. Die beiden Figuren zeigen ferner die gegenüber der ersten Ausführungsform geänderte Gestaltung des Aufnahmeteiles 3, das mit seiner Ausnehmung 92 in eine Nase 93 des Schaleneinsatzteiles 3 einsteckbar ist, wobei das Aufnehmeteil 3 nach Entfernen vom Kindersitz durchaus als Sitzunterlage für grössere Kinder im Fahrzeug dienen kann, in diesem Fall wurde die Oberfläche 94 des Aufnahmeteiles 3 auf dem Fahrzeugsitz zu liegen kommen und der Sicherheitsgurt für das Kind durch die Ausnehmung 92 geführt werden.

Die Figuren 14 und 15 zeigen das in seiner Lage zwischen der Fahrposition und der Ruheposition veränderbare Schaleneinsatzteil 2, dessen dem Schalenrahmenteil 1 zugewandtes oberes Ende mit einem Wulst 95 versehen ist, der in eine Ausnehmung 96 in Schalenrahmenteil 1 ragt, die breiter ist als der Wulst 95. Darüber hinaus weist das Schaleneinsatzteil 2 an seinem vorderen Ende eine sich in wesentlichen über die gesamte Breite des Schaleneinsatzteiles 2 erstrekkende Ausnehmung 97 auf, in die ein in der Welle 80 gelagertes und sich über eine entsprechende Breite erstreckendes Hebelelement 98 mit seinem freien Ende eingreift. Ein Schwenkhebel 99 ist mit dem Hebelement 98 verbunden und bewirkt somit beim Verschwenken entgegen dem Uhrzeigersinn eine entsprechende Bewegung des Hebelementes 98, das im Sinne der Darstellung der Figur 15 das Schaleneinsatzteil 2 nach vorne zieht und dabei in die Ruheposition kippt, bei der der Wulst 95 in der Ausnehmung 96 nach unten bewegt wird.

**Ansprüche**

1.) Kindersitz für Fahrzeuge mit einer biegesteifen Sitzschale mit einer Sitzfläche, einer Rückenstütze und vorgezogenen Seitenabschnitten im Kopf-, Lenden-und Fußbereich, einem in der Sitzschale angeordneten Polsterelement zur Aufnahme des Kindes sowie mit der Sitzschale verbundenem Aufnahmeteil zur Aufnahme des Beckengurtteils des Fahrzeugsicherheitsgurts, dadurch gekennzeichnet, daß die Sitzschale aus einem Schalenrahmenteil (1) und einem in dieses einsteckbaren, das Polsterelement (17) aufnehmenden Schaleneinsatzteil (2) besteht, wobei das Schaleneinsatzteil (2) an seiner Unterseite mit einem Stützrahmen (18) versehen ist.

2.) Kindersitz nach Anspruch 1, dadurch gekennzeichnet, daß das Schalenrahmenteil (1) eine Öffnung (12) zur eingepaßten Aufnahme des Schaleneinsatzteiles (2) aufweist.

3.) Kindersitz nach Anspruch 1 oder 2, dadurch gekennzeichnet, daß das Schaleneinsatzteil (2) im Schalenrahmenteil (1) zwischen einer Sitz-und einer Ruheposition verstellbar gelagert ist, wobei mindestens eine im Schalenrahmenteil (1) schwenkbar gelagertes Hebelelement (98) in eine Ausnehmung (97) im Schaleneinsatzteil (2) eingreift und mit einem Schwenkhebel (99) verbunden ist.

4.) Kindersitz nach Anspruch 1 bis 3, dadurch gekennzeichnet, daß der Stützrahmen (18) als U-förmige Streben ausgebildet ist, deren Schenkel (19) im Bereich der Schenkelenden gleichsinnig abgewinkelt sind, wobei die freien Enden der - schenkel (19) gelenkig im vorderen Bereich der Sitzfläche (16) am Schaleneinsatzteil (2) befestigt und durch eine Arretiereinrichtung (22) festlegbar sind.

5.) Kindersitz nach Anspruch 4, dadurch gekennzeichnet, daß die Arretiereinrichtung (22) als verstellbares Verbindungselement (22) ausgebildet ist, das gelenkig mit dem die Schenkel (19) verbindenden Steg (22) und der Rückenstütze (14) des Schaleneinsatzteiles (2) verbunden ist.

6.) Kindersitz nach einem der vorhergehenden Ansprüche, dadurch gekennzeichnet, daß die Unterseite des Schaleneinsatzteils (2) beabstandet voneinander angeordnete, parallel zueinander in Längsrichtung der Sitzfläche (13) verlaufende Profilierungen (70) aufweist.

7.) Kindersitz nach einem der vorhergehenden Ansprüche, dadurch gekennzeichnet, daß das Schaleneinsatzteil (2) aus Sitzfläche (13) und Rückenstütze (14) besteht, und benachbart der Vorderkante (27) der Sitzfläche (13) Fußstützen bzw. Fußführungen (30) mit dem Schaleneinsatzteil (2) verbunden sind.

8.) Kindersitz nach einem der vorherigen Ansprüche, dadurch gekennzeichnet, daß in Schalenrahmenteil (1) ein ausfahrbares Fahrwerk (6), insbesondere ein Fahrwerk (6) mit zwei Achsen (48) angeordnet ist, das in eingefahrenem Zustand vollständig im Schalenrahmenteil (1) versenkt ist.

9.) Kindersitz nach Anspruch 8, dadurch gekennzeichnet, daß das Fahrwerk (6) über ein Hebelgestänge (39) mittels eines in der Rückenstütze (8, 9) des Schalenrahmenteils (1) - schwenkbar gelagerten Griffteils (50) zum Bewegen des aus Kindersitz und Fahrwerk gebildeten Kinderwagens ein-bzw. ausfahrbar ist, wobei die Räder (49) des Kinderwagens bei in die Rückenstütze (8, 9) eingeschwenktem Griffteil (50) eingefahren und bei aus der Rückenstütze (8, 9) ausgeschwenktem Griffteil (50) ausgefahren sind und das Griffteil (50) zumindest in seiner ausgeschwenkten Position durch ein Rastglied (57) arretierbar ist.

10.) Kindersitz nach Anspruch 8 oder 9, dadurch gekennzeichnet, daß jeweils zwei Räder (49) auf einer Achse (48) angeordnet und die Räder (49) senkrecht zur Achse (48) ein-bzw. ausfahrbar sind, parallel zu den einander benachbarten Rädern (49) jeweils ein im Schalenrahmenteil (1) - schwenkbar gelagertes und gegen die Kraft mindestens einer Feder (65) bewegbares kappenartiges Schutzblech (58) angeordnet ist, wobei bei vollständigem Einfahren der jeweiligen Räder (49) diese auf einen umlaufenden Wulst (60) des Schutzbleches (58) drücken und dabei das Schutzblech (58) in eine Position verschwenken, bei der es diese Räder (49) auf einer Außenseite und derem Umfang vollständig umgibt.

11.) Kindersitz nach Anspruch 8 oder 9, dadurch gekennzeichnet, daß jeweils zwei Räder (49) auf einer Achse (48) angeordnet und die Räder (49) senkrecht zur Achse (48) einbzw. ausfahrbar sind, wobei jedem Rad (49) ein dieses vorne bzw. hinten umschließendes Schutzblech (58) zugeordnet ist, das im verschwenkbaren Lagerelement (47) des jeweiligen Rades (49) um eine beabstandet zur Drehachse (48) des Rades (49) positionierte Schwenkachse (88) gelagert ist.

12.) Kindersitz nach einem der vorherigen Ansprüche, dadurch gekennzeichnet, daß die Rückenstütze (8, 9) des Schalenrahmenteils (1) auf ihrer Rückseite ein abnehmbares Rückensegment (7) aufweist, das ein Gepäcknetz (37) und/oder eine durch einen Deckel (38) verschließbare Ausnehmung beinhaltet.

13.) Kindersitz nach einem der vorherigen Ansprüche, dadurch gekennzeichnet, daß das Schalenrahmenteil (1) im Bereich der Rückseite der Rückenstütze (8, 9) eine sich vom oberen Rand der Rückenstütze (8, 9) nach unten erstreckende längliche Ausnehmung (66) zur Aufnahme eines zusammengeklappten, ausschwenkbaren Schirmes (69) aufweist, der im Bereich des oberen Endes der Ausnehmung (66) mit dem Schalenrahmenteil (1) verbunden ist.

14.) Kindersitz nach einem der vorherigen Ansprüche, dadurch gekennzeichnet, daß das Schalenrahmenteil (1) im Bereich der Rückseite der Rückenstütze (8, 9) zwei sich über die Länge der Rückenstütze (8, 9), erstreckende nutförmige Ausnehmungen (66) aufweist, in die mit jeweils benachbarten Rädern (49) verbundene Kufen (67) einsteckbar, insbesondere einrastbar sind, wobei eine der Ausnehmungen (66) gleichzeitig der Aufnahme des Schirmes (69) dient.

15.) Kindersitz nach einem der vorherigen Ansprüche, dadurch gekennzeichnet, daß das Aufnahmeteil (3) für das Beckengurtteil (4) des Fahrzeugsicherheitsgurtes (5) als Fangkörper ausgebildet ist, der sich über das Schaleneinsatzteil (2) erstreckt und in das Schalenrahmenteil (1) einsteckbar ist.

FIG. 1

FIG. 2

FIG. 3

FIG. 4

FIG. 4 A

FIG. 5

# FIG. 6

# FIG. 7

FIG. 8

FIG. 9

# FIG. 10

# FIG. 11

Fig. 12

Fig. 13

Fig. 14

Fig. 15